# EUROPÄISCHE PATENTSCHRIFT

(11) **EP 3 572 663 B1**
(45) Veröffentlichungstag und Bekanntmachung des Hinweises auf die Patenterteilung: **24.01.2024**
(21) Anmeldenummer: 19175381.3
(22) Anmeldetag: 20.05.2019
(51) Int. Cl.: F02M 37/24, F02M 37/26, F02M 37/32, F02M 37/02, F02M 37/04, F02M 37/54, F02M 37/00, B01D 36/00

(54) **KRAFTSTOFFFILTER ZUM REINIGEN VON KRAFTSTOFF FÜR EINE BRENNKRAFTMASCHINE**
FUEL FILTER FOR CLEANING FUEL FOR AN INTERNAL COMBUSTION ENGINE
FILTRE À COMBUSTIBLE DESTINÉ AU NETTOYAGE DU COMBUSTIBLE POUR UN MOTEUR À COMBUSTION INTERNE

(30) Priorität: 23.05.2018 DE 102018208082
(43) Veröffentlichungstag der Anmeldung: 27.11.2019
(73) Patentinhaber: Mahle International GmbH, 70376 Stuttgart (DE)
(72) Erfinder: BRAUNHEIM, Michael, 73035 Göppingen (DE); GÄNSWEIN, Matthias, 73732 Esslingen (DE); HÄUßERMANN, Uli, 70734 Fellbach (DE); SCHILD, Stephan, 74211 Leingarten (DE); WILHELM, Dietmar, 75446 Wiernsheim (DE)
(74) Vertreter: BRP Renaud & Partner mbB Rechtsanwälte Patentanwälte Steuerberater

(56) Entgegenhaltungen:
- EP-A1- 1 851 425
- EP-A1- 3 287 631
- EP-A2- 1 653 075
- DE-C1- 3 740 804
- DE-T2- 69 909 520

## Beschreibung

Kraftstofffilter zum Reinigen von Kraftstoff für eine Brennkraftmaschine Die Erfindung betrifft ein Kraftstofffilter zum Reinigen von Kraftstoff für eine Brennkraftmaschine. Die Erfindung betrifft ferner eine Brennkraftmaschine mit einem solchen Kraftstofffilter sowie ein Kraftfahrzeug mit einer solchen Brennkraftmaschine.

Komplexe Kraftstofffilter, insbesondere für Dieselkraftstoff, sind oftmals zweistufig aufgebaut und umfassen ein Vorfilter sowie ein Hauptfilter mit einer dazwischen geschalteten Fördereinrichtung, typischerweise in Form einer geeigneten Kraftstoffpumpe. Das Kraftstofffilter umfasst dabei üblicherweise einen Wasserabscheider zum Abscheiden vom im Kraftstoff enthaltenen Wasser sowie - als Teil des Wasserabscheiders - einen Wassersammelraum zum Sammeln des abgeschiedenen Wassers.

Dabei kann der Wassersammelraum bei bestimmten Filtersystemen eine Rücklaufleitung zurück in den Kraftstofftank aufweisen. Eine sinnvolle Anwendung für die Rücklaufleitung aus dem Wassersammelraum zum Tank ist z.B. auch eine Füllstands-Begrenzung für Wasser im Wassersammelraum. Damit eine Strömung erfolgen kann, muss zur Rücklaufleitung ein Druckgefälle anstehen. Bei saugseitig betriebenen Kraftstofffiltern muss das Druckgefälle in Richtung Rücklaufleitung im Filter erst noch erzeugt werden. Eine solche komplexe Filtereinrichtung wird beispielsweise in der EP1653075A2 offenbart.

Es ist eine Aufgabe der vorliegenden Erfindung, bei der Entwicklung von Kraftstofffiltern für Brennkraftmaschinen, insbesondere für Dieselmotoren, neue Wege aufzuzeigen.

Diese Aufgabe wird durch den Gegenstand der unabhängigen Patentansprüche gelöst. Bevorzugte Ausführungsformen sind Gegenstand der abhängigen Patentansprüche.

Grundidee der Erfindung ist demnach, ein Kraftstofffilter mit einer Saugstrahlpumpe auszustatten, welche fluidisch mit dem Wassersammelraum des Wasserabscheiders verbunden ist, sodass mittels der Saugstrahlpumpe Wasser und Kraftstoff aus dem Wassersammelraum, in dem ein Unterdruck wirkt, in die Rücklaufleitung abgeführt werden können, in dem ein höherer Druck als im Wassersammelraum wirkt. In der Saugstrahlpumpe wird die hierfür erforderliche Pumpwirkung mit Hilfe eines Treibmediums aus dem druckseitigen Hauptfilter bereitgestellt, das durch Impulsaustausch das Wasser bzw. Kraftstoff aus dem Wassersammelraum ansaugt und somit fördert. Mithilfe der Saugstrahlpumpe kann daher auf einfache Weise das für den Transport von Wasser bzw. Kraftstoff aus dem Wassersammelraum erforderliche Druckgefälle erzeugt werden, ohne dass hierfür von außen ein externer Antrieb zum Antreiben der Pumpe bereitgestellt werden muss.

Ein erfindungsgemäßes Kraftstofffilter zum Reinigen von Kraftstoff für eine Brennkraftmaschine umfasst ein Hauptfilter und ein stromauf des Hauptfilters angeordnetes Vorfilter. Das Vorfilter und das Hauptfilter können somit sukzessive von dem Kraftstoff durchströmt werden. Das Vorfilter umfasst einen Wasserabscheider zum Abscheiden von im Kraftstoff vorhandenem Wasser. Hierzu weist der Wasserabscheider ein Filterelement in Form einer hydrophoben Membran, zum Abscheiden des Wassers aus dem Kraftstoff sowie einen Wassersammelraum zum Sammeln des abgeschiedenen Wassers auf. Das Vorfilter ist mittels einer Fördereinrichtung fluidisch mit dem Hauptfilter verbunden, welche den Kraftstoff vom Vorfilter in das Hauptfilter fördert. Der aus dem Vorfilter gesaugte Kraftstoff strömt aus einem geeigneten Kraftstoff-Reservoir in das Vorfilter nach. Nach dem Durchströmen des Hauptfilters steht der gereinigte Kraftstoff zur Verwendung in der Brennkraftmaschine zur Verfügung.

Erfindungsgemäß umfasst die Kraftstofffiltereinrichtung eine fluidisch mit dem Wassersammelraum des Wasserabscheiders verbundene Saugstrahlpumpe zum Abführen des mittels des Wasserabscheiders abgeschiedenen bzw. des im Wassersammelraum angesammelten Wassers wenn das Wasser einen vorbestimmten maximalen Füllstand überschreitet.

Im Betrieb des Kraftstofffilters, d.h. im Betrieb der Fördereinrichtung mit Druckaufbau im Hauptfilter, strömt kontinuierlich eine kleine Teilmenge aus dem Druckbereich des Hauptfilters über die Saugstrahlpumpe in die Rücklaufleitung ab und fördert dabei kontinuierlich Wasser bzw. Kraftstoff aus dem Wassersammelraum im Unterdruckbereich des Vorfilters in die Rücklaufleitung.

Der Wassersammelraum des Vorfilters ist normalerweise mit Kraftstoff gefüllt und entlüftet. Enthält der aus dem Kraftstoffreservoir geförderte Kraftstoff Anteile von Wasser, wird dieses im Wasserabscheider zurückgehalten, fließt dort in den Wassersammelraum und verdrängt dort den darin vorhandenen Kraftstoff. Das Wasser sammelt sich aufgrund der höheren Dichte des Wassers zum Kraftstoff am Boden des Wassersammelraums an und füllt nach und nach den Wassersammelraum. Ist der Wassersammelraum gefüllt, sollte das Wasser mittels einer Wasserablassmöglichkeit abgelassen werden. Daher wird ein fluidisch mit der Saugstrahlpumpe verbundener Wasserauslass als Überlauf ausgestaltet, der eine maximal mögliche Füllhöhe an Wasser im Wassersammelraum festlegt.

Würde kein Wasser aus dem Wassersammelraum abgelassen bzw. abgeführt, würde der Wassersammelraum bei weiter zugeführtem Wasser überlaufen, d.h. das weiter zugeführtes Wasser würde nicht zurückgehalten und würde zusammen mit dem Kraftstoff zum Motor gelangen können. Aus diesem Grund muss der maximale Füllstand für Wasser im Wassersammelraum begrenzt werden.

Ein weiterer Grund für die Festlegung eines maximal zulässigen Füllstands für Wasser im Wassersammelraum ist die in der Praxis bestehende Gefahr des Frierens des Wassers zu Eis unter Volumenzuwachs. Beim Frieren des Wassers zu Eis muss im Wassersammelraum ein mit Kraftstoff gefüllter Volumenanteil vorhanden sein, der von dem vergrößerten Volumen des Eises ausgefüllt werden kann, wobei der Kraftstoff über die Zu- und Ablaufkanäle des Wassersammelraums in andere Bereiche des Kraftstofffilters verdrängt werden können muss. Bei vollständig mit Wasser gefülltem Behältnis kann dieses beim Gefrieren des Wassers platzen.

Da es in der Praxis nicht immer möglich ist, Wasser aus dem Wasserabscheider abzulassen, wird die maximale Füllhöhe für Wasser im Wassersammelraum begrenzt, indem die Verbindungsleitung Wassersammelraum - Saugstrahlpumpe - Rücklaufleitung auf einem definierten Niveau im Wassersammelraum fluidisch ausgeleitet wird und diese Verbindung so einen "Überlauf" für Wasser bildet. Unterhalb der Ausleitung in die Verbindungleitung sammelt sich das Wasser wegen des Dichteunterschiedes zum Kraftstoff am Gehäuseboden an. Wird weiter Wasser zugeführt und erreicht der Füllstand das Niveau der Ausleitung in die Verbindungsleitung, dann wird weiteres Wasser mit dem kontinuierlichen Volumenstrom durch die Verbindungsleitung vom Wassersammelraum über die Saugstrahlpumpe in die Rücklaufleitung transportiert. Das Niveau der Ausleitung in die Verbindungsleitung im Wassersammelraum ist dabei so gewählt, dass bei diesem Niveau und normalem Betriebssituationen kein Wasser zusammen mit dem Kraftstoff in die Brennkraftmaschine gelangen kann und dass das Filtergehäuse beim Frieren des gesammelten Wassers nicht platzt.

Wird Wasser aus dem Wassersammelraum über die Saugstrahlpumpe in die Rücklaufleitung transportiert, so gelangt es über die Rücklaufleitung zurück in den Tank. Der Tank dient somit für eine Übergangszeit als Puffer für das zurückgeführte Wasser.

Gemäß der erfindungsgemäßen Ausführungsform ist am Hauptfilter ein Kraftstoffabzug vorgesehen, der fluidisch mit der Saugstrahlpumpe kommuniziert. Auf diese Weise kann der durch den Kraftstoffabzug strömende Kraftstoff als Treibmedium für die Saugstrahlpumpe verwendet werden, sodass der Aufwand für den Antrieb der Pumpe vernachlässigbar bleibt. Nutzt man den Kraftstoffabzugskanal aus dem Hauptfilter zur Saugstrahlpumpe gleichzeitig als Entlüftungskanal für den Kraftstofffilter, ist auch der wirtschaftliche Zusatzaufwand gering.

Gemäß einer anderen bevorzugten Ausführungsform kommuniziert der Kraftstoffabzug über die Saugstrahlpumpe fluidisch mit einem zusätzlichen Wasserabscheider. Dieser zusätzliche Wasserabscheider dient zum Separieren des als Treibmedium fungierenden Kraftstoffs von dem von der Saugstrahlpumpe aus dem Wasserabscheider bzw. dessen Wassersammelraum geförderten Wasser.

Alternativ dazu kann es vorteilhaft sein, den Volumenstrom aus der Verbindungsleitung Wassersammelraum - Saugstrahlpumpe - Rücklaufleitung über einen weiteren Wasserabscheider in den Tank zur leiten, und eine Wasserablassmöglichkeit in diesem weiteren Wasserabscheider vorzusehen. Dieser weitere Wasserabscheider kann zweckmäßig räumlich getrennt vom eigentlichen Kraftstofffilter angeordnet sein, also bevorzugt als Komponente im oder am Tank. Das Volumen des Wassersammelraums könnte bei dieser nicht erfindungsgemäßen Ausführungsvariante dementsprechend klein ausgeführt werden, und im Wassersammelraum könnte auf eine Wasserablassmöglichkeit verzichtet werden.

Gemäß einer vorteilhaften Weiterbildung ist im zusätzlichen Wasserabscheider ein Wasserabscheider-Kraftstoffabzug angeordnet. Dieser kommuniziert zum Abführen des im zusätzlichen Wasserabscheider vorhandenen Kraftstoffs fluidisch mit einem Kraftstoff-Reservoir. Auf diese Weise kann das abgeschiedene Wasser effektiv von Kraftstoff-Rückständen befreit werden, wobei der separierte Kraftstoff zur Verwendung in der Brennkraftmaschine zur Verfügung steht.

Gemäß einer vorteilhaften Weiterbildung kann das Hauptfilter ein Filtergehäuse aufweisen, in welchem ein Filterelement angeordnet ist. Das Filterelement unterteilt den vom Filtergehäuse begrenzten Gehäuseinnenraum in eine Rohseite und in eine Reinseite. Besagter Kraftstoffabzug zur Saugstrahlpumpe erfolgt dabei auf der Rohseite, wobei bei einem Kraftstoffabzug auf der Rohseite im oberen Bereich des Filtergehäuses die Entlüftung der Filtereinrichtung im gleichen Kanal erfolgt.

Auf der Reinseite des Filters ist ein Kraftstoffauslass zum Ausleiten des gereinigten Kraftstoffs aus dem Kraftstofffilter in eine Brennkraftmaschine vorgesehen. Somit kann der ausgefilterte Kraftstoff in der Brennkraftmaschine verwendet werden. Die mittels der Saugstrahlpumpe abgeleitete Kraftstoffmenge entspricht im Wesentlichen der Kraftstoffmenge, die zur selbstständigen Entlüftung des Filters permanent zum Tank zurückgeführt wird und stellt von daher keinen Nachteil dar.

Gemäß der erfindungsgemäßen Ausführung weist der Wasserabscheider ein Abscheider-Gehäuse auf, welches einen von dem Kraftstoff durchströmbaren Gehäuseinnenraum begrenzt. Bei dieser erfindungsgemäßen Ausführung ist in dem Gehäuseinnenraum eine von dem Kraftstoff durchströmbare hydrophobe Membran zum Abscheiden des im Kraftstoff vorhandenen Wassers angeordnet. Mittels einer solchen hydrophoben Membran lassen sich hohe Abscheideraten bei geringem Bauraumbedarf erzielen

Besonders bevorzugt ist der Wassersammelraum durch einen bzgl. der Schwerkraftrichtung unteren Bereich des Gehäuseinnenraums gebildet.

Die Erfindung betrifft ferner eine Brennkraftmaschine für ein Kraftfahrzeug mit Zylindern, in welchen jeweils eine Brennkammer vorhanden ist. Jeder Zylinder weist wenigstens einen Kraftstoffinjektor zum Einspritzen von Kraftstoff in die jeweilige Brennkammer auf. Die Brennkraftmaschine umfasst eine Kraftstoffzuführung zum Einleiten des Kraftstoffs in die Kraftstoffinjektoren. Erfindungsgemäß ist stromauf der Kraftstoffzuführung ein voranstehend vorgestelltes Kraftstofffilter angeordnet. Die voranstehend erläuterten Vorteile des Kraftstofffilters übertragen sich daher auch auf die erfindungsgemäße Brennkraftmaschine.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: grobschematisch den Aufbau eines erfindungsgemäßen Kraftstofffilters in schaltplanartiger Darstellung,
- Fig. 2: eine nicht erfindungsgemäße

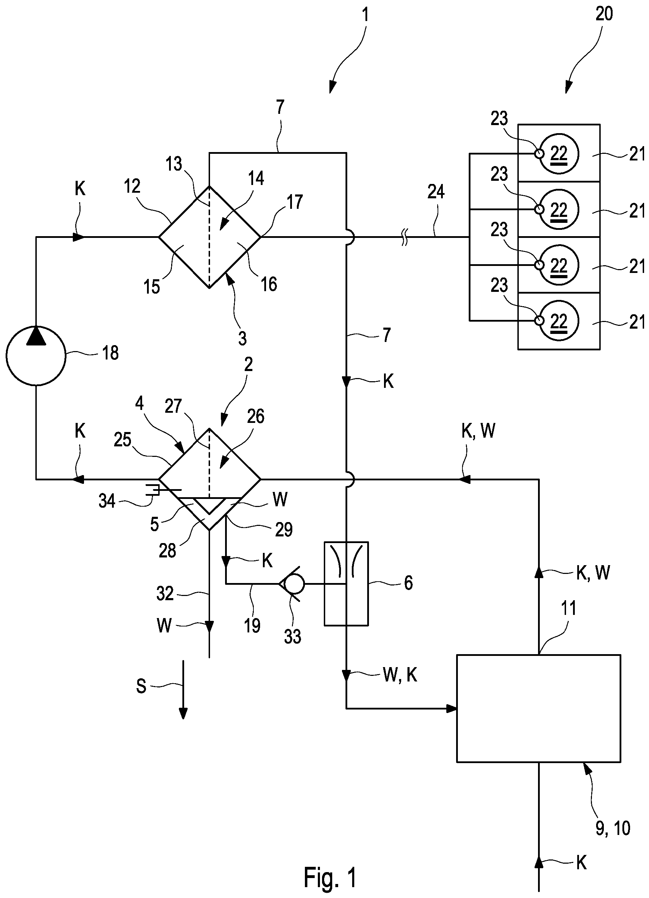

Variante des Kraftstofffilters der Figur 1 mit einem zusätzlichen Wasserabscheider.

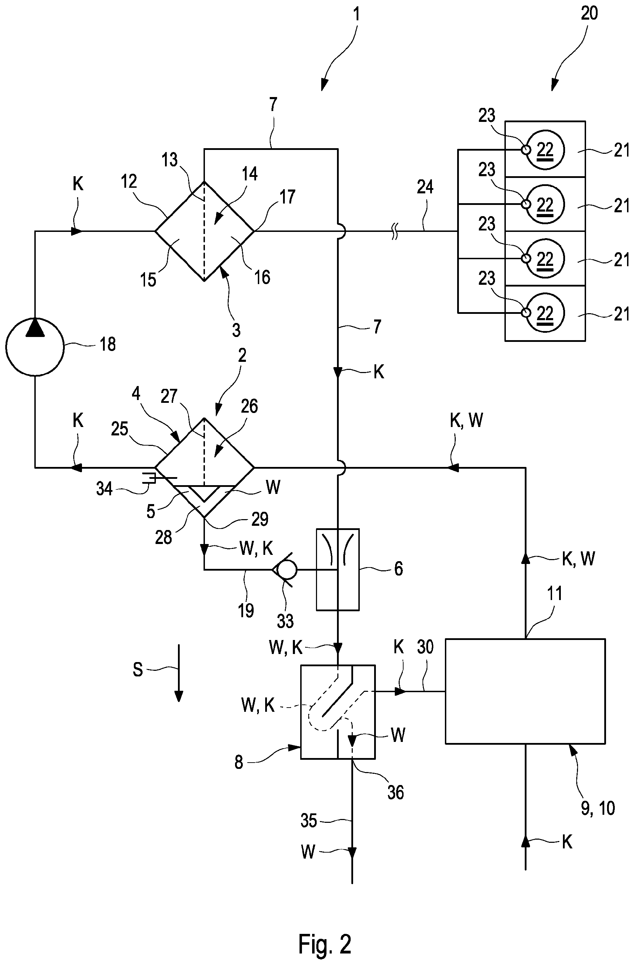

Figur 1 illustriert schematisch und in einer schaltplanartigen Darstellung den Aufbau erfindungsgemäßen Kraftstofffilters 1 zum Reinigen von Kraftstoff K für eine Brennkraftmaschine. Dabei beschreibt die Figur 1 einen Kraftstofffilter mit einer Wasserablassmöglichkeit aus dem Wassersammelraum und Figur 2 eine vorteilhafte Weiterbildung mit einem zusätzlichen Wasserabscheider, der zum Separieren des als Treibmedium fungierenden Kraftstoffs dient.

Das Kraftstofffilter 1 umfasst gemäß Figur 1 ein Hauptfilter 3 und ein stromauf des Hauptfilters 3 angeordnetes Vorfilter 2. Stromauf des Vorfilters 2 ist ein als Kraftstofftank 10 realisiertes Kraftstoff-Reservoir 9 mit dem zu reinigenden Kraftstoff K vorgesehen. Die beiden Filter 2, 3 sind sukzessive von dem Kraftstoff K durchströmbar. Das Vorfilter 2 umfasst einen Wasserabscheider 4 zum Abscheiden von im Kraftstoff K vorhandenem Wasser W.

Der Wasserabscheider 4 weist ein Abscheider-Gehäuse 25 auf, welches einen von dem Kraftstoff K durchströmbaren Gehäuseinnenraum 26 begrenzt. Im Gehäuseinnenraum 26 des Wasserabscheiders 4 ist eine von dem Kraftstoff K durchströmbare hydrophobe Membran 27 zum Abscheiden des im Kraftstoff K vorhandenen Wassers W angeordnet. Der Wasserabscheider 4 weist auch einen Wassersammelraum 5 zum Sammeln des im Wasserabscheider 4 abgeschiedenen Wassers W auf. Das Vorfilter 2 ist mittels einer Fördereinrichtung 18 fluidisch mit dem Hauptfilter 3 verbunden. Die Fördereinrichtung 18 fördert den Kraftstoff K vom Vorfilter 2 in das Hauptfilter 3. Außerdem umfasst das Kraftstofffilter 1 eine fluidisch mit dem Wassersammelraum 5 des Wasserabscheiders 4 verbundene Saugstrahlpumpe 6. Mittels der Saugstrahlpumpe 6, die in Figur 1 nur grobschematisch dargestellt ist, wird permanent Medium aus dem Wassersammelraum 5 abgeführt. Abgeschiedenes Wassers, das im Wassersammelraum 5 unterhalb der Ausleitung zur Saugstrahlpumpe vorhanden ist, verbleibt im Wassersammelraum 5 (vgl. Figur 1). Demgegenüber werden Kraftstoff K und Wasser W oberhalb der Ausleitung unmittelbar über die Saugstahlpumpe 6 aus diesem abgeführt.

Der Wassersammelraum 5 des Wasserabscheiders 4 ist durch einen bzgl. der Schwerkraftrichtung S im unteren Bereich 28 des Gehäuseinnenraums 26 gebildet, wenn sich der Wasserabscheider 4 in einer Gebrauchslage befindet. Im unteren Bereich 28 des Gehäuseinnenraums 26 ist ein Auslass 29 vorgesehen, der fluidisch mit der Saugstrahlpumpe 6 kommuniziert. Durch den Abstand des Auslass 29 zum tiefer liegenden unteren Ende des Gehäuseinnenraums 26 lässt sich die max. Füllhöhe für Wasser im Wassersammelraum einstellen. Auf diese Weise kann mittels der Saugstrahlpumpe 6 das Wasser W oberhalb eines gewollten Füllstandes aus dem Wassersammelraum 5 abgepumpt werden. Ein Wasserstands-Sensor 34, der das Vorhandensein von Wasser W nach außen anzeigt, z.B. mit einem elektrischen Signal, kann unterhalb des Auslasses 29 und damit innerhalb der maximalen Füllhöhe für Wasser W angeordnet sein und das Vorhandensein von Wasser W nach außen anzeigen. Am Gehäuseboden des unteren Bereichs 28 des Wassersammelraums 5 kann ein Wasserablass 32 angeordnet sein, um Wasser aus dem Kraftstofffilter 1 in die Umgebung auszutragen. Wie Figur 1 erkennen lässt, umfasst das Hauptfilter 3 einen Kraftstoffabzug 7, der fluidisch mit der Saugstrahlpumpe 6 kommuniziert. Auf diese Weise kann der durch den Kraftstoffabzug 7 strömende und der Saugstrahlpumpe 6 zugeführte Kraftstoff als Treibmedium für das von der der Saugstrahlpumpe 6 zu fördernde Wasser W aus dem Wasserabscheider 4 dienen. Das Hauptfilter 3 weist ein in Figur 1 nur grobschematisch dargestelltes Filtergehäuse 12 auf, in welchem ein Filterelement 13, vorzugsweise austauschbar, angeordnet ist. Das Filterelement 13 unterteilt den vom Filtergehäuse 12 begrenzten Gehäuseinnenraum 14 in eine Rohseite 15 und eine Reinseite 16. In der Reinseite 16 ist ein Kraftstoffauslass 17 zum Ausleiten des gereinigten Kraftstoffs K aus dem Kraftstofffilter 1 in eine Brennkraftmaschine 20 vorhanden. Gemäß Figur 2 ist die Saugstrahlpumpe 6 in einer Verbindungsleitung 7 angeordnet, die die Rohseite 15 des Hauptfilters 3 fluidisch mit dem zusätzlichen Wasserabscheider 8 verbindet. Das Medium aus dieser Leitung treibt die Saugstrahlpumpe 6 an. Im Weiteren ist die Saugstrahlpumpe 6 über eine Verbindungsleitung 19 fluidisch mit dem Wassersammelraum 5 verbunden und saugt das Medium aus dem Wassersammelraum 5 ab.

Die in Figur 1 nur grobschematisch dargestellte Brennkraftmaschine 20 besitzt beispielhaft vier Zylinder 21, in welchen jeweils eine Brennkammer 22 vorhanden ist. Jeder Zylinder 21 weist einen Kraftstoffinjektor 23 zum Einspritzen des gereinigten Kraftstoffs K in die jeweilige Brennkammer 22 auf. Die Brennkraftmaschine 20 besitzt eine Kraftstoffzuführung 24 zum Einleiten des Kraftstoffs K in die Kraftstoffinjektoren 23. Das erfindungsgemäße Kraftstofffilter 1 ist somit stromauf der Kraftstoffzuführung 24 angeordnet. Das Kraftstoff-Reservoir 9 bzw. der Kraftstofftank 10 weist einen Kraftstoffauslass 11 auf, der über das Vorfilter 2, die Fördereinrichtung 18 und das Hauptfilter 3 mit der Brennkraftmaschine 2o kommuniziert.

Die Figur 2 zeigt eine nicht erfindungsgemäße Modifikation der Figur 1. Entsprechend Figur 2 kommuniziert der Kraftstoffabzug 7 über die Saugstrahlpumpe 6 fluidisch mit einem zusätzlichen Wasserabscheider 8 zum Separieren des als Treibmedium fungierenden Kraftstoffs von dem von der Saugstrahl-Pumpe aus dem Wasserabscheider 4 bzw. dessen Wassersammelraum 5 geförderten Wassers W. Im zusätzlichen Wasserabscheider 8 kann ein Wasserabscheider-Kraftstoffabzug 30 angeordnet sein, der zum Abführen des im Wasserabscheider 4 vorhandenen Kraftstoffs fluidisch mit dem Kraftstoff-Reservoir 9 bzw. mit dem Kraftstofftank 10 kommuniziert. Im Weiteren kann im zusätzlichen Wasserabscheider 8 ein Wasserstandsensor 34 für Wasser angeordnet sein und das Vorhandensein von Wasser nach außen anzeigen, z.B. mit Hilfe eines elektrischen Signals. Im unteren Bereich 36 des zusätzlichen Wasserabscheiders 8 kann ein Wasserablass 35 angeordnet sein, um Wasser W aus dem Filtersystem an die Umgebung auszutragen.

Gemäß Figuren 1 und Figur 2 ist in der Verbindungsleitung 19 vom Wassersammelraum zur Saugstrahlpumpe 6 ein Rückschlagventil 33 vorgesehen, welches Strömung vom Wassersammelraum 5 zur Saugstrahlpumpe 6 zulässt und Strömung von der Saugstrahlpumpe 6 zum Wassersammelraum 5 blockiert.

## Patentansprüche

1. Kraftstofffilter (1) zum Reinigen von Kraftstoff (K) für eine Brennkraftmaschine (20),
- mit einem Hauptfilter (3) und mit einem stromauf des Hauptfilters (3) angeordneten Vorfilter (2), welche sukzessive von dem Kraftstoff (K) durchströmbar sind,
- wobei das Vorfilter (2) einen Wasserabscheider (4) zum Abscheiden von im Kraftstoff (K) vorhandenem Wasser (W) aufweist, welcher einen Wassersammelraum (5) zum Sammeln des abgeschiedenen Wassers (W) umfasst,
- wobei der Wasserabscheider (4) ein Abscheider-Gehäuse (25) aufweist, welches einen von dem Kraftstoff (K) durchströmbaren Vorfilter-Gehäuseinnenraum (26) begrenzt,
- wobei der Wassersammelraum (5) des Wasserabscheiders (4) durch einen bzgl. der Schwerkraftrichtung (S) unteren Bereich (28) des Vorfilter-Gehäuseinnenraums (26) gebildet ist, wobei in dem unteren Bereich (28) des Wassersammelraums (5) ein Wasserauslass (29) vorgesehen ist,
- wobei das Hauptfilter (3) ein Filtergehäuse (12) aufweist, in welchem ein Filterelement (13) angeordnet ist, welches einen vom Filtergehäuse (12) begrenzten Hauptfilter-Gehäuseinnenraum (14) in eine Rohseite (15) und in eine Reinseite (16) unterteilt,
- wobei in der Reinseite (16) ein Kraftstoffauslass (17) zum Ausleiten des gereinigten Kraftstoffs (K) aus dem Kraftstofffilter (1) in die Brennkraftmaschine (20) vorhanden ist,
- wobei das Kraftstofffilter (1) eine fluidisch mit dem Wassersammelraum (5) verbundene Saugstrahlpumpe (6) zum Abführen von Kraftstoff (K) oder/und Wasser (W) aus dem Wassersammelraum (5) umfasst,
- am Hauptfilter (3) ein Kraftstoffabzug (7) vorhanden ist, der fluidisch mit der Saugstrahlpumpe (6) kommuniziert, so dass der durch den Kraftstoffabzug (7) strömende Kraftstoff (K) als Treibmedium der Saugstrahlpumpe (6) fungiert, wobei der Kraftstoffabzug (7) des Hauptfilters (3) zur Saugstrahlpumpe (6) von der Rohseite (15) ausgeht, und der gleiche Kanal (7) auch zur Entlüftung des Kraftstofffilters zum Tank hin genutzt wird,
- wobei das Vorfilter (2) über eine Fördereinrichtung (18) fluidisch mit dem Hauptfilter (3) verbunden ist, welche den Kraftstoff (K) vom Vorfilter (2) in das Hauptfilter (3) fördert und dort einen Überdruck aufbaut,
**dadurch gekennzeichnet, dass**
- in dem Vorfilter-Gehäuseinnenraum (26) eine von dem Kraftstoff (K) durchströmbare hydrophobe Membran (27) zum Abscheiden des im Kraftstoff (K) enthaltenden Wassers (W) angeordnet ist,
- im Wassersammelraum (5) ein Wasserauslass (29) zur Saugstrahlpumpe (6) als Überlauf ausgeführt ist, der die Füllhöhe für Wasser im Wassersammelraum (5) begrenzt.

2. Kraftstofffilter nach Anspruch 1,
**dadurch gekennzeichnet, dass**
im Wassersammelraum (5) unterhalb des Wasserauslasses (29) zur Saugstrahlpumpe (6) ein Wasserstandsensor (34) zur Detektion von Wasser (W) vorgesehen ist.

3. Kraftstofffilter nach einem der vorhergehenden Ansprüche,
**dadurch gekennzeichnet, dass**
in einer Verbindungsleitung (19) zwischen Wassersammelraum (5) und Saugstrahlpumpe (6) ein Rückschlagventil (33) angeordnet ist, welches Strömung vom Wassersammelraum (5) zur Saugstrahlpumpe (6) zulässt, aber Strömung von der Saugstrahlpumpe (6) in den Wassersammelraum (5) verhindert.

4. Brennkraftmaschine (20) für ein Kraftfahrzeug,
- mit Zylindern (21), in welchen jeweils eine Brennkammer (22) vorhanden ist,
- wobei jeder Zylinder (21) wenigstens einen Kraftstoffinjektor (23) zum Einspritzen von Kraftstoff (K) in die jeweilige Brennkammer (22) aufweist,
- wobei die Brennkraftmaschine (20) wenigstens eine Kraftstoffzuführung (24) zum Einleiten des Kraftstoffs (K) in die Kraftstoffinjektoren (23) umfasst,
- wobei stromauf der wenigstens einen Kraftstoffzuführung (24) ein Kraftstofffilter (1) nach einem der vorhergehenden Ansprüche angeordnet ist.

5. Kraftfahrzeug mit einer Brennkraftmaschine (20) nach Anspruch 4.

## Claims

1. Fuel filter (1) for cleaning fuel (K) for an internal combustion engine (20),
- with a main filter (3) and a prefilter (2) arranged upstream of the main filter (3), through which the fuel (K) can flow successively,
- wherein the prefilter (2) has a water separator (4) for separating water (W) present in the fuel (K), which water separator comprises a water collection chamber (5) for collecting the separated water (W),
- wherein the water separator (4) has a separator housing (25), which delimits a prefilter housing inner chamber (26) through which the fuel (K) can flow,
- wherein the water collection chamber (5) of the water separator (4) is formed by a lower region (28) of the prefilter housing inner chamber (26) relative to the direction of gravitational force (S), wherein in the lower region (28) of the water collection chamber (5) a water outlet (29) is provided,
- wherein the main filter (3) has a filter housing (12), in which a filter element (13) is arranged, which divides a main filter housing inner chamber (14) delimited by the filter housing (12) into a dirty side (15) and a clean side (16),
- wherein in the clean side (16) a fuel outlet (17) is provided for channeling the cleaned fuel (K) out of the fuel filter (1) into the internal combustion engine (20),
- wherein the fuel filter (1) comprises a suction jet pump (6) connected fluidically to the water collection chamber (5) for removing fuel (K) and/or water (W) from the water collection chamber (5),
- on the main filter (3) a fuel output (7) is provided, which communicates fluidically with the suction jet pump (6), so that the fuel (K) flowing through the fuel output (7) acts as a propellant for the suction jet pump (6), wherein the fuel output (7) of the main filter (3) to the suction jet pump (6) comes from the dirty side (15), and the same channel (7) is also used for venting the fuel filter towards the tank,
- wherein the prefilter (2) is connected fluidically to the main filter (3) via a conveying apparatus (18) which conveys the fuel (K) from the prefilter (2) to the main filter (3) and builds up overpressure there,
**characterized in that**
- in the prefilter housing inner chamber (26) a hydrophobic membrane (27) through which the fuel (K) can flow is arranged for separating the water (W) contained in the fuel (K),
- in the water collection chamber (5) a water outlet (29) to the suction jet pump (6) is configured as an overflow which delimits the filling level of water in the water collection chamber (5).

2. Fuel filter according to claim 1,
**characterized in that**
in the water collection chamber (5) a water level sensor (34) is provided below the water outlet (29) to the suction jet pump (6) for detecting water (W).

3. Fuel filter according to any one of the preceding claims,
**characterized in that**
in a connection line (19) between the water collection chamber (5) and the suction jet pump (6) a non-return valve (33) is arranged, which permits flow from the water collection chamber (5) to the suction jet pump (6) but prevents flow from the suction jet pump (6) to the water collection chamber (5).

4. Internal combustion engine (20) for a motor vehicle,
- with cylinders (21), in each of which a combustion engine (22) is provided,
- wherein each cylinder (21) has at least one fuel injector (23) for injecting fuel (K) into the respective combustion chamber (22),
- wherein the internal combustion engine (20) comprises at least one fuel supply (24) for introducing the fuel (K) into the fuel injectors (23),
- wherein upstream of the at least one fuel supply (24) a fuel filter (1) according to any one of the preceding claims is arranged.

5. Motor vehicle with an internal combustion engine (20) according to claim 4.

## Revendications

1. Filtre à combustible (1) pour le nettoyage de combustible (K) pour un moteur à combustion interne (20),
- avec un filtre principal (3) et avec un préfiltre (2) agencé en amont du filtre principal (3) qui peuvent être traversés de manière successive par le combustible (K),
- dans lequel le préfiltre (2) présente un séparateur d'eau (4) pour la séparation d'eau (W) présente dans le combustible (K), séparateur d'eau qui comprend un espace collecteur d'eau (5) pour la collecte de l'eau séparée (W),
- dans lequel le séparateur d'eau (4) présente un boîtier de séparateur (25) qui délimite un espace intérieur de boîtier de préfiltre (26) pouvant être traversé par le combustible (K),
- dans lequel l'espace collecteur d'eau (5) du séparateur d'eau (4) est formé par une zone inférieure (28) en référence au sens de la gravité (5) de l'espace intérieur de boîtier de préfiltre (26), dans lequel une sortie d'eau (29) est prévue dans la zone inférieure (28) de l'espace collecteur d'eau (5),
- dans lequel le filtre principal (3) présente un boîtier de filtre (12), dans lequel un élément de filtre (13) est agencé, élément qui divise un espace intérieur de boîtier de filtre principal (14) délimité par le boîtier de filtre (12) en un côté produit brut (15) et en un côté produit pur (16),
- dans lequel dans le côté produit pur (16), une sortie de combustible (17) est présente pour l'évacuation du combustible (K) nettoyé hors du filtre de combustible (1) dans le moteur à combustion interne (20),
- dans lequel le filtre à combustible (1) comprend une pompe à jet aspirant (6) reliée de manière fluidique à l'espace collecteur d'eau (5) pour l'évacuation de combustible (K) et/ou d'eau (W) hors de l'espace collecteur d'eau (5),
- une extraction de combustible (7) est présente au niveau du filtre principal (3), extraction qui communique de manière fluidique avec la pompe à jet aspirant (6) de sorte que le combustible (K) s'écoulant à travers l'extraction de combustible (7) fonctionne comme fluide moteur de la pompe à jet aspirant (6), dans lequel l'extraction de combustible (7) du filtre principal (3) par rapport à la pompe à jet aspirant (6) sort du côté produit brut (15), et le même canal (7) est aussi utilisé pour la ventilation du filtre à combustible vers le réservoir,
- dans lequel le préfiltre (2) est relié par le biais d'un appareil de refoulement (18) de manière fluidique au filtre principal (3), appareil qui refoule le combustible (K) du préfiltre (2) dans le filtre principal (3) et y établit une surpression, **caractérisé en ce que**
- une membrane (27) hydrophobe pouvant être traversée par le combustible (K) est agencée dans l'espace intérieur de boîtier de préfiltre (26) pour la séparation de l'eau (W) contenue dans le combustible (K),
- une sortie d'eau (29) est réalisée dans l'espace collecteur d'eau (5) pour la pompe à jet aspirant (6) comme trop-plein qui délimite la hauteur de remplissage pour de l'eau dans l'espace collecteur d'eau (5).

2. Filtre à combustible selon la revendication 1,
**caractérisé en ce que**
un capteur de niveau d'eau (34) pour la détection d'eau (W) est prévu dans l'espace collecteur d'eau (5) en dessous de la sortie d'eau (29) par rapport à la pompe à jet aspirant (6).

3. Filtre à combustible selon l'une quelconque des revendications précédentes,
**caractérisé en ce que**
un clapet antiretour (33) est agencé dans une conduite de liaison (19) entre l'espace collecteur d'eau (5) et la pompe à jet aspirant (6), clapet qui permet l'écoulement de l'espace collecteur d'eau (5) à la pompe à jet aspirant (6) mais empêche l'écoulement de la pompe à jet aspirant (6) dans l'espace collecteur d'eau (5).

4. Moteur à combustion interne (20) pour un véhicule automobile,
- avec des cylindres (21) dans lesquels respectivement une chambre de combustion (22) est présente,
- dans lequel chaque cylindre (21) présente au moins un injecteur de combustible (23) pour l'injection du combustible (K) dans la chambre de combustion (22) respective,
- dans lequel le moteur à combustion interne (20) comporte au moins une alimentation en combustible (24) pour l'introduction du combustible (K) dans les injecteurs de combustible (23),
- dans lequel un filtre à combustible (1) selon l'une quelconque des revendications précédentes est agencé en amont de la au moins une alimentation en combustible (24).

5. Véhicule automobile avec un moteur à combustion interne (20) selon la revendication 4.
